# EUROPÄISCHE PATENTSCHRIFT

(11) **EP 1 858 749 B1**
(45) Veröffentlichungstag und Bekanntmachung des Hinweises auf die Patenterteilung: **27.08.2008**
(21) Anmeldenummer: 07702695.3
(22) Anmeldetag: 11.01.2007
(51) Int. Cl.: B62D 61/12, B60G 9/00, B60G 11/27

(54) **ACHSHEBEVORRICHTUNG FÜR EIN FAHRZEUG**
AXLE RAISING DEVICE FOR A VEHICLE
DISPOSITIF DE LEVAGE D'ESSIEU POUR VÉHICULE

(30) Priorität: 13.01.2006 DE 102006001839
(43) Veröffentlichungstag der Anmeldung: 28.11.2007
(73) Patentinhaber: SAF-HOLLAND GmbH, 63856 Bessenbach (DE)
(72) Erfinder: HOCK, Helmut, 63856 Bessenbach (DE); PANKE, Harald, 63856 Bessenbach (DE)
(74) Vertreter: Bauer, Clemens
(86) Internationale Anmeldenummer: PCT/EP2007/000217
(87) Internationale Veröffentlichungsnummer: WO 2007/082679

(56) Entgegenhaltungen:
- EP-A- 1 661 739
- EP-A1- 0 836 984
- WO-A-01/12495
- WO-A-98/38074
- DE-U1- 20 317 350

## Beschreibung

Die vorliegende Erfindung bezieht sich auf eine Achshebevorrichtung für ein Fahrzeug, insbesondere für eine luftgefederte Fahrzeugachse, sowie auf eine Radaufhängung für ein Fahrzeug, insbesondere für ein Nutzfahrzeug.

Achshebevorrichtungen der in Frage stehenden Art sind aus dem Stand der Technik bekannt. Diese Achshebevorrichtungen setzen im wesentlichen voraus, daß die anzuhebende Achse von zwei parallelen Führungs- bzw. Längslenkern getragen wird, wobei die Führungslenker jeweils einerseits vorzugsweise luftgefedert an dem Fahrzeugchassis und andererseits über eine Gelenkachse schwenkbeweglich an einer Karosserie angeordnet bzw. abgestützt sind. Üblicherweise ist an jedem Führungslenker eine Achsanhebevorrichtung vorgesehen, wobei diese ebenfalls mittig zwischen zwei Längslenkern über ein Verbindungselement vorgesehen sein kann. So offenbart beispielsweise die DE 203 17 350 U1 eine Achshebevorrichtung, die für einen nachträglichen Einbau durch einfaches Abstützen an Widerlagern verwendbar ist. Diese Achsanhebevorrichtung weist ein Hubelement auf, welches auf einer Unterstützungsvorrichtung angeordnet ist, welche sich am Rahmen abstützt bzw. dort befestigt ist. Bei Aktivierung des Hubelements drückt ein Teil des Hubelements gegen den Führungslenker, um diesen zu bewegen.

Achshebevorrichtungen für Fahrzeuge, die ein Stützelement, ein Hubelement und ein Hebelelement aufweisen, die miteinander verbunden sind, gehen beispielsweise aus der EP 1 661 739 A1 die einen Stand derTtechnik nach Art. 54(3) EPü darstellt und der gattungsbilgenden WO 98/38074 A1 hervor.

Problematisch bei derartigen Anordnungen ist jedoch, daß diese lediglich Achsen bis zu einem begrenzten Gewicht anheben können, da eine größere Dimensionierung der Achsanhebevorrichtung nicht möglich oder nicht gewünscht ist.

Vor diesem Hintergrund ist es Aufgabe der vorliegenden Erfindung, eine Achshebevorrichtung für ein Fahrzeug, insbesondere für luftgefederte Fahrzeugachsen, sowie eine Radaufhängung für ein Fahrzeug, insbesondere für ein Nutzfahrzeug, vorzusehen, mittels welchen die Achsen effektiver angehoben werden können.

Diese Aufgabe wird durch eine Achshebevorrichtung für ein Fahrzeug, insbesondere für luftgefederte Fahrzeugachsen, gemäß Anspruch 1 sowie durch eine Radaufhängung für ein Fahrzeug, insbesondere ein Nutzfahrzeug, gemäß Anspruch 13 gelöst. Bevorzugte Ausführungsformen sind Gegenstand der abhängigen Unteransprüche.

Erfindungsgemäß ist eine Achshebevorrichtung für ein Fahrzeug, insbesondere für luftgefederte Fahrzeugachsen, vorgesehen, umfassend ein Stützelement, ein Hubelement und ein Hebelelement, wobei das Stützelement und das Hebelelement derart über das Hubelement miteinander koppelbar sind, daß sich bei Betätigung des Hubelements das Stützelement an einem Rahmenelement des Fahrzeugs abstützt und das Hebelelement eine vorzugsweise vertikale Kraft auf einen Achslenker des Fahrzeugs ausübt, um diesen anzuheben, wobei das Hebelelement mit Bezug auf ein distales Ende des Achslenkers und/oder das Rahmenelement dreh- bzw. schwenkbar im wesentlichen ortsfest angeordnet ist und wobei das Stützelement am Hebelelement dreh- bzw. schwenkbar gelagert ist.

Die Achshebevorrichtung ist hierbei vorzugsweise derart ausgebildet, daß diese nachträglich an einer Fahrzeugachse montierbar ist, d.h. an ein bestehendes System nachrüstbar ist, ohne daß die Notwendigkeit besteht, das bestehende System substantiell zu verändern. Somit ist die Achshebevorrichtung vorzugsweise modular aufgebaut, d.h. unabhängig von fahrzeugspezifischen Komponenten ausgebildet. Das Hebelelement ist mit Bezug auf ein distales Ende des Achslenkers und/oder das Rahmenelement dreh- bzw. schwenkbar im wesentlichen ortsfest angeordnet. In anderen Worten ist das Hebelelement vorzugsweise über eine Achse dreh- bzw. schwenkbar an dem Rahmenelement angeordnet. Diese Achse kann vorteilhafterweise mit der Schwenkachse des Achslenkers zusammenfallen, über welche der Achslenker dreh- bzw. schwenkbar an dem Rahmenelement angeordnet ist. Somit können Achslenker und Hebelelement über die identische Achse an dem Rahmenelement ortsfest festgelegt sein. Es versteht sich, daß die Achse des Hebelelements und die Achse des Achslenkers jedoch auch voneinander unterschiedlich bzw. beabstandet am Rahmenelement angeordnet sein können. Das Stützelement ist dreh- bzw. schwenkbar am Hebelelement gelagert. Somit ist das Stützelement lediglich über eine Dreh- bzw. Schwenkachse mit dem Hebelelement verbunden, so daß das Stützelement mit Bezug auf das Hebelelement schwenkbar ist. Die Verschwenkung bzw. Rotation des Stützelements in eine Richtung wird durch das Hubelement vorteilhafterweise begrenzt. Die Verschwenkung bzw. Rotation des Stützelements in die andere Richtung wird durch einen mittelbaren (z.B. über zumindest ein zwischengeschaltetes bzw. -gelagertes bzw. dazwischen angeordnetes Hebelglied) oder unmittelbaren Anschlag am Rahmenelement des Fahrzeugs begrenzt. Infolgedessen sind das Stützelement und das Hebelelement derart über das Hubelement miteinander koppelbar, daß bei Betätigung des Hubelements das Stützelement dazu tendiert, sich vom Hebelelement weg zu verschwenken und an einem Rahmenelement des Fahrzeugs abzustützen. Eine weitere substantielle Bewegung des Stützelements in diese Richtung wird durch die Abstützung am Rahmenelement verhindert, so daß die vom Hubelement verursachte Bewegung im wesentlichen lediglich durch das Hebelelement umgesetzt wird. Das Hebelelement übt infolgedessen eine vorzugsweise vertikale Kraft auf einen Achslenker des Fahrzeugs aus, um diesen anzuheben. Es versteht sich, daß die geometrische Konfiguration des Hebelelements bzw. die geometrische Konfiguration bzw. Anordnung von Stützelement und/oder Hubelement derart ausgestaltet sein können, daß das Hebelelement eine vertikale Kraft auf den Achslenker ausübt oder eine sonstige beliebige Kraftrichtung bewirkt. Da das Stützelement lediglich am Hebelelement ortsfest, jedoch drehbar gelagert ist, ergibt sich somit für das Stützelement eine im wesentlichen sogenannte schwimmende Aufhängung mit Bezug auf das Rahmenelement, da das Hebelelement bis zum Anschlag am Rahmenelement im wesentlichen frei beweglich ist, solange das Hubelement nicht aktiviert ist. In anderen Worten bewirkt eine Rotation des Stützelements in Bezug auf das Hebelelement und eine Rotation des Hebelelements um seine Lagerung am Rahmenelement während der Aktivierung des Hubelements eine Lageänderung jedes Bereichs des Stützelements in Bezug auf das Rahmenelement.

Vorzugsweise weist das Stützelement einen Stützelementlagerbereich auf, an welchem das Stützelement dreh- bzw. schwenkbar am Hebelelement über einen ersten Hebelelementlagerbereich angeordnet ist. Die Verbindung zwischen Stützelement und Hebelelement über den Stützelementlagerbereich bzw. ersten Hebelelementlagerbereich kann beispielsweise über einen Bolzen bzw. einer Achse erfolgen, die durch Stütz- und Hebelelement greift. Alternativ kann eine beliebig andere Verbindung zwischen Hebelelement und Stützelement vorgesehen sein, welche eine Rotation bzw. Verschwenkung zwischen Hebelelement und Stützelement erlaubt.

Bevorzugterweise weist das Stützelement einen Stützelementanschlagbereich auf, welcher mit dem Rahmenelement des Fahrzeugs in Kontakt bringbar ist, um sich an diesem abzustützen. Der Stützelementanschlagbereich ist vorteilhafterweise vorgesehen, um eine Abstützung am Rahmenelement vorzusehen, wenn auf das Stützelement über das Hubelement eine Kraft ausgeübt wird. Diese Kraft bewirkt eine Verschwenkung des Stützelements bis zu dem Punkt, an welchem das Stützelement im wesentlichen über den Stützelementanschlagbereich mit dem Rahmenelement in Kontakt gelangt und sich an diesem somit abstützt. Der Stützelementanschlagbereich kann eine beliebige Konfiguration aufweisen, welche jedoch vorteilhafterweise derart gestaltet ist, daß eine Relativbewegung des Stützelementanschlagbereichs am Rahmenelement gewährleistet bzw. zugelassen wird. Dies kann ein Gleiten, Wälzen oder Rollen sein.

Weiterhin bevorzugterweise weist das Hebelelement einen zweiten Hebelelementlagerbereich auf, über welchen das Hebelelement mit dem distalen Ende des Achslenkers und/oder dem Rahmenelement verbunden ist. Das Hebelelement kann somit direkt dreh- bzw. schwenkbar über den zweiten Hebelelementlagebereich am Achslenker befestigt sein, wobei dies vorzugsweise an einem distalen Ende des Achslenkers erfolgt. Alternativ kann das Hebelelement ebenfalls über den zweiten Hebelelementlagebereich an einem Rahmenelement unabhängig vom Achslenker dreh- bzw. schwenkbar angeordnet sein. Es ist ebenfalls in einer bevorzugten Ausführungsform möglich, das Hebelelement und den Achslenker über eine gemeinsame Achse am Rahmenelement zu befestigen.

Vorteilhafterweise sind der erste Hebelelementlagerbereich und der zweite Hebelelementlagerbereich voneinander beabstandet. In anderen Worten fällt die Rotationsachse des ersten Hebelelementlagerbereichs und des zweiten Hebelelementlagerbereichs nicht aufeinander. Durch eine derartige Konfiguration von erstem Hebelelementlagerbereich und zweitem Hebelelementlagerbereich wird gewährleistet, daß bei einer Aktivierung des Hubelements und somit Relativbewegung von Stützelement und Hebelelement zueinander der erste Hebelelementlagerbereich in Bezug auf den zweiten Hebelelementlagerbereich rotiert und somit seine Position ändert. Durch die Positionsänderung des ersten Hebelelementlagerbereichs verschiebt sich somit der Stützelementlagerbereich, so daß der Hebel zwischen Stützelementlagerbereich und Stützelementanschlagbereich verändert wird. Hierdurch wird ein Verstärkungs- bzw. Servoeffekt erzielt, der in einer Kraftverstärkung auf den Achslenker resultiert. Somit wird durch das Stützelement, welches an einem vom zweiten Hebelelementlagerbereich entfernten Bereich (Stützelementlagerbereich bzw. erster Hebelelementlagerbereich) am Hebelelement gelagert ist, eine zusätzliche Hebelwirkung durch Abstützung am Stützelementanschlagbereich erzielt, so daß eine Zusatzkraft zur Achsanhebung bewirkt wird.

Weiterhin vorteilhafterweise ist der zweite Hebelelementlagerbereich zwischen dem ersten Hebelelementlagerbereich und einem mit einem Achslenker in Kontakt bringbaren ersten Anschlagbereich des Hebelelements angeordnet. Somit wird eine vorteilhafterweise günstige Kraftverstärkung (Servoeffekt) bei Aktivierung des Hubelements gewährleistet.

Bevorzugterweise weist das Hubelement ein erstes und ein zweites operatives Ende auf, welches erste operative Ende durch das Stützelement aufgenommen ist und welches zweite operative Ende mit einem zweiten Anschlagbereich des Hebelelements in Kontakt steht bzw. mit diesem in Kontakt bringbar ist. Es versteht sich, daß das zweite operative Ende mit dem zweiten Anschlagbereich des Hebelelements in Verbindung steht, d.h. das zweite operative Ende fest am Hebelelement angeordnet ist. Durch Betätigung des Hubelements wird somit der zweite Anschlagbereich des Hebelelements vom ersten operativen Ende des Hubelements bzw. dem hierzu benachbarten Teil des Stützelements beabstandet, wobei das Hebelelement und das Stützelement über den Stützelementlagerbereich bzw. ersten Hebelelementlagerbereich gelagert voneinander weg rotieren. Somit erfolgt bei Betätigung des Hubelements eine voneinander weg gerichtete Relativbewegung zwischen dem Bereich des Stützelements, an welchem das Hebelelement angeordnet ist, und einem zweiten Anschlagbereich des Hebelelements.

Weiterhin bevorzugterweise ist das Hubelement als Gasfaltenbalg und/oder Membranzylinder ausgebildet. Das Hubelement kann ebenfalls eine beliebig andere, vorzugsweise mechanische Vorrichtung sein, an deren zwei Bereichen eine im wesentlichen entgegengesetzte Bewegung vorgesehen werden kann.

Zweckmäßigerweise ist der Stützelementanschlagbereich ausgebildet, bei Betätigung des Hubelements entlang einem Roll- oder Gleitbereich des Rahmenelements zu rollen oder gleiten.

Zweckmäßigerweise ist der Stützelementanschlagbereich als Rollelement, vorzugsweise als Rolle oder Walze, ausgebildet. Somit wird während der Aktivierung des Hubelements eine sehr geringe Reibung zwischen dem Stützelementanschlagbereich und dem Rahmenelement bzw. dessen Roll- oder Gleitbereich erzielt, so daß die Achshebevorrichtung einen hohen Wirkungsgrad besitzt. Es versteht sich; daß der Stützelementanschlagbereich ebenfalls als Gleitelement bzw. -bereich ausgebildet sein kann, um während der Aktivierung des Hubelements an dem entsprechenden Bereich des Rahmenelements entlang zu gleiten. Hierzu werden vorzugsweise gleitfähige Materialverbindungen vorgesehen.

Weiterhin zweckmäßigerweise weist der Stützelementanschlagbereich im wesentlichen die geometrische Konfiguration einer Evolvente auf, welche ausgelegt ist, bei Betätigung des Hubelements auf einem entsprechend ausgebildeten Rollbereich des Rahmenelements abzurollen bzw. zu wälzen. Die Evolvente kann eine bereits aus der Zahnradtechnik bekannte geometrische (Oberflächen-)Konfiguration aufweisen. Eine derartige Evolventenkontaktierung hat den Vorteil, daß sich die Kontakttlächen während der Aktivierung bzw. Betätigung des Hubelements stets berühren und in diesen Berührungspunkten die annähernd gleiche Geschwindigkeit aufweisen und somit in den Berührungspunkten keine Relativbewegung zwischen den Elementen besteht, so daß eine im wesentlichen reibungsarme Kraftübertragung gewährleistet ist.

Bevorzugterweise ist das Hebelelement derart ausgebildet, daß der erste Hebelelementlagerbereich und der erste und zweite Anschlagbereich im wesentlichen eine Dreieckskonfiguration bilden, wobei der zweite Hebelelementlagerbereich vorzugsweise im wesentlichen entlang des sich zwischen dem ersten Hebelelementlagerbereich und dem ersten Anschlagbereich erstreckenden Seitenbereichs angeordnet ist. Das Hebelelement ist somit, in Fahrzeugachsrichtung gesehen, im wesentlichen dreiecksförmig. In anderen Worten spannen die Bereiche "erster Hebelelementlagerbereich", "erster Anschlagbereich" und "zweiter Anschlagbereich" ein Dreieck auf. Bei einer derartigen Konfiguration ist der zweite Hebelelementlagerbereich vorzugsweise entlang einer sich zwischen dem ersten Anschlagbereich und dem ersten Hebelelementlagerbereich erstreckenden Geraden ausgebildet, wobei zur Bewirkung des Servoeffekts der zweite Hebelelementlagerbereich zwischen dem ersten Hebelelementlagerbereich und dem ersten Anschlagbereich vorgesehen ist. Durch eine derartige Ausbildung des Hebelelements wird ein effizienter Servoeffekt der Achshebevorrichtung erzielt, wobei durch eine entsprechend angepaßte Geometrie des Hebelelements (Größe des Dreiecks) die Achshebevorrichtung an verschiedene räumliche Gegebenheiten der Fahrzeugachsen angepaßt werden kann.

Weiterhin erfindungsgemäß ist eine Radaufhängung für ein Fahrzeug, insbesondere für ein Nutzfahrzeug, mit einer Achshebevorrichtung vorgesehen, umfassend einen Achslenker, der zumindest ein Achsrohr einer Fahrzeugachse trägt und an zumindest einem Ende dreh- bzw. schwenkbar an einem Rahmenelement des Fahrzeugs gelagert ist, ein Stützelement, ein Hubelement und ein Hebelelement, wobei das Stützelement und das Hebelelement derart über das Hubelement miteinander koppelbar sind, daß sich bei Betätigung des Hubelements das Stützelement an dem Rahmenelement des Fahrzeugs abstützt und das Hubelement eine vorzugsweise vertikale Kraft auf den Achslenker des Fahrzeugs ausübt, um diesen anzuheben, wobei das Hebelelement mit Bezug auf das Ende des Achslenkers und/oder das Rahmenelement dreh- bzw. schwenkbar im wesentlichen ortsfest angeordnet ist und wobei das Stützelement am Hebelelement dreh- bzw. schwenkbar gelagert ist.

Die Achshebevorrichtung ist hierbei vorzugsweise derart ausgebildet, daß diese nachträglich an einer Fahrzeugachse bzw. dem Achslenker montierbar ist, d.h. an ein bestehendes System nachrüstbar ist, ohne daß die Notwendigkeit besteht, bestehende System substantiell zu verändern. Somit ist die Achshebevorrichtung vorzugsweise modular aufgebaut, d.h. unabhängig von fahrzeugspezifischen Komponenten ausgebildet. Das Hebelelement ist mit Bezug auf ein distales Ende des Achslenkers und/oder das Rahmenelement dreh- bzw. schwenkbar im wesentlichen ortsfest angeordnet. In anderen Worten ist das Hebelelement vorzugsweise über eine Achse dreh- bzw. schwenkbar an dem Rahmenelement angeordnet. Diese Achse kann vorteilhafterweise mit der Schwenkachse des Achslenkers zusammenfallen, über welche der Achslenker dreh- bzw. schwenkbar an dem Rahmenelement angeordnet ist. Somit können Achslenker und Hebelelement über die identische Achse an dem Rahmenelement ortsfest festgelegt sein. Es versteht sich, daß die Achse des Hebelelements und die Achse des Achslenkers jedoch auch voneinander unterschiedlich bzw. beabstandet am Rahmenelement angeordnet sein können. Das Stützelement ist dreh- bzw. schwenkbar am Hebelelement gelagert. Somit ist das Stützelement lediglich über eine Dreh- bzw. Schwenkachse mit dem Hebelelement verbunden, so daß das Stützelement mit Bezug auf das Hebelelement schwenkbar ist. Die Verschwenkung bzw. Rotation des Stützelements in eine Richtung wird durch das Hubelement vorteilhafterweise begrenzt. Die Verschwenkung bzw. Rotation des Stützelements in die andere Richtung wird durch einen Anschlag am Rahmenelement des Fahrzeugs begrenzt. Infolgedessen sind das Stützelement und das Hebelelement derart über das Hubelement miteinander koppelbar, daß bei Betätigung des Hubelements das Stützelement dazu tendiert, sich vom Hebelelement weg zu verschwenken und an einem Rahmenelement des Fahrzeugs abzustützen. Eine weitere substantielle Bewegung des Stützelements in diese Richtung wird durch die Abstützung am Rahmenelement verhindert, so daß die vom Hubelement verursachte Bewegung im wesentlichen lediglich durch das Hebelelement umgesetzt wird. Das Hebelelement übt infolgedessen eine vorzugsweise vertikale Kraft auf einen Achslenker des Fahrzeugs aus, um diesen anzuheben. Es versteht sich, daß die geometrische Konfiguration des Hebelelements bzw. die geometrische Konfiguration bzw. Anordnung von Stützelement und/oder Hubelement derart ausgestaltet sein können, daß das Hebelelement eine horizontale Kraft auf den Achslenker ausübt oder eine sonstige beliebige Kraftrichtung bewirkt. Da das Stützelement lediglich am Hebelelement ortsfest, jedoch drehbar gelagert ist, ergibt sich somit für das Stützelement eine im wesentlichen sogenannte schwimmende Aufhängung mit Bezug auf das Rahmenelement, da das Hebelelement bis zum Anschlag am Rahmenelement im wesentlichen frei beweglich ist, solange das Hubelement nicht aktiviert ist. In anderen Worten bewirkt eine Rotation des Stützelements in Bezug auf das Hebelelement und eine Rotation des Hebelelements um seine Lagerung am Rahmenelement während der Aktivierung des Hubelements eine Lageänderung jedes Bereichs des Stützelements in Bezug auf das Rahmenelement.

Es versteht sich, daß sämtliche weiteren Merkmale und Vorteile der erfindungsgemäßen Achshebevorrichtung ebenfalls bei der erfindungsgemäßen Radaufhängung Anwendung finden können und diese somit in die erfindungsgemäße Radaufhängung inkorporiert werden können.

Weitere Vorteile und Merkmale der Erfindung werden nachfolgend anhand einer begleitenden Zeichnung einer bevorzugten Ausführung beispielhaft beschrieben. Es zeigt:
Figur 1 eine schematische Seitenansicht einer bevorzugten Ausführungsform der erfindungsgemäßen Achshebevorrichtung.
Figur 2 eine schematische Seitenansicht einer weiteren bevorzugten Ausführungsform der erfindungsgemäßen Achshebevorrichtung.
Figur 3 eine schematische Seitenansicht einer weiteren bevorzugten Ausführungsform der erfindungsgemäßen Achshebevorrichtung.
Figur 4 eine schematische Seitenansicht einer weiteren bevorzugten Ausführungsform der erfindungsgemäßen Achshebevorrichtung.

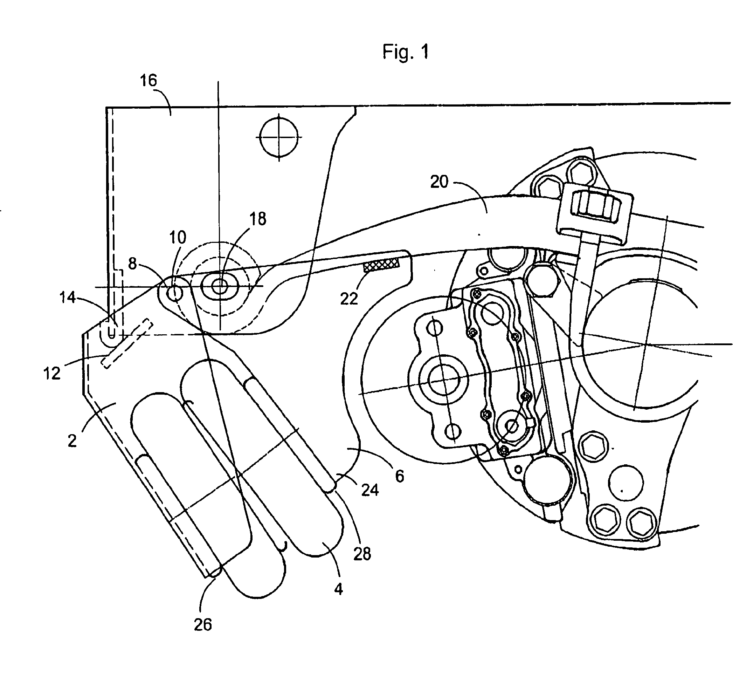

Die in **Fig. 1** dargestellte beispielhafte Ausführungsform der erfindungsgemäßen Achshebevorrichtung umfaßt ein Stützelement 2, ein Hubelement 4 sowie ein Hebelelement 6.

Das Stützelement 2 ist über einen Stützelementlagerbereich 8 an einem ersten Hebelelementlagerbereich 10 des Hebelelements 6 angeordnet. Die Verbindung zwischen Stützelementlagerbereich 8 und erstem Hebelelementlagerbereich 10 ist derart gestaltet, daß eine Verschwenkung bzw. Rotation zwischen Hebelelement 6 und Stützelement 2 zugelassen wird. Ferner weist das Stützelement 2 einen Stützelementanschlagbereich 12 auf, welcher, sich abstützend, einen entsprechenden Roll- bzw. Gleitbereich 14 des Rahmenelements 16 eines Fahrzeugs kontaktieren kann bzw. damit kontaktierbar ist. Der Stützelementanschlagbereich 12 und der Roll- oder Gleitbereich 14 können über ihre geometrische Konfiguration derart zusammenwirken, daß ein möglichst geringer Reibungswiderstand bei Bewegung des Stützelements 2 vorgesehen ist.

Das Hebelelement 6 weist neben dem ersten Hebelelementlagerbereich 10 einen zweiten Hebelelementlagerbereich 18 auf, an welchem das Hebelelement 6 mit dem Rahmenelement 16 und/oder einem vorzugsweise distalen Endbereich eines Achslenkers bzw. Radaufhängungslenkers bzw. Längslenkers 20 eines Fahrzeugs dreh- bzw. schwenkbar befestigt bzw. angeordnet ist. Infolgedessen kann das Hebelelement 6 um den zweiten Hebelelementlagerbereich 18 rotieren. Schließlich weist das Hebelelement 6 einen ersten Anschlagbereich 22 auf, welcher mit einem vom Drehpunkt des Achslenkers 20 beabstandeten Bereich des Achslenkers 20 in Kontakt bzw. Eingriff bringbar ist, um den Achslenker 20 um seine Schwenkachse zu rotieren. Die mittels des ersten Anschlagbereichs 22 auf den Achslenker 20 übertragene Kraft wird in einen zweiten Anschlagbereich 24 des Hebelelements 6 über das Hubelement 4 eingeleitet, wobei bei Aktivierung des Hubelements 4 der zweite Anschlagbereich 24 des Hebelelements 6 mit dem Hubelement 4 kontaktierbar bzw. in Eingriff bringbar ist.

Das Hubelement 4 weist ein erstes operatives Ende 26 sowie ein zweites operatives Ende 28 auf. Das erste operative Ende 26 des Hubelements 4 ist durch das Stützelement 2 aufgenommen. In anderen Worten ist das Hubelement 4 fest mit dem Stützelement 2 verbunden. Das zweite operative Ende 28 ist mit dem zweiten Anschlagbereich 24 des Hebelelements 6 in Kontakt bringbar. Das zweite operative Ende 28 des Hubelements 4 kann jedoch ebenfalls kontinuierlich mit dem zweiten Anschlagbereich 24 des Hebelelements 6 in Kontakt stehen bzw. mit diesem fest verbunden sein. Bei Aktivierung des Hubelements 4 beabstanden sich das erste operative Ende 26 und das zweite operative Ende 28 voneinander. Infolgedessen wird eine voneinanderweg bzw. entgegengesetzt gerichtete Rotation von Stützelement 2 und Hebelelement 6 um den gemeinsamen Lagerbereich, d.h. den Stützelementlagerbereich 8 und den ersten Hebelelementlagerbereich 10, bewirkt. Der Stützelementanschlagbereich 12 des Stützelements 2 wird somit mit dem Rahmenelement 6 bzw. dessen Roll- oder Gleitbereich 14 in Kontakt gebracht, um die im Stützelement 2 wirkende Kraft aufzunehmen. Bei weiterer Betätigung des Hubelements wird somit aufgrund des Anschlags des Stützelementanschlagbereichs 12 am Rahmenelement 16 eine Kraft bzw. Bewegung über den ersten Anschlagbereich 22 des Hebelelements 6 auf den Achslenker 20 übertragen, so daß dieser angehoben wird. Infolge der Beabstandung des ersten Hebelelementlagerbereichs 10 und zweiten Hebelelementlagerbereichs 18 bewirkt somit eine Rotation des Hebelelements 6 eine Positionsveränderung des ersten Hebelelementlagerbereichs 10, so daß sich die Hebelverhältnisse derart ändern, daß ein Kraftverstärkungseffekt bzw. Servoeffekt vorteilhafterweise bereitgestellt wird. Hierdurch ist es vorteilhafterweise möglich, eine Achshebevorrichtung in kompakter Art und Weise zu gestalten, welche fähig ist, eine hohe Kraft aufzubringen und somit schwere Fahrzeugachsen anzuheben, bzw. mittels welcher ein kleiner dimensioniertes (in Größe und/oder Kraftleistung) Hubelement bei gleicher Hubleistung verwendet werden kann.

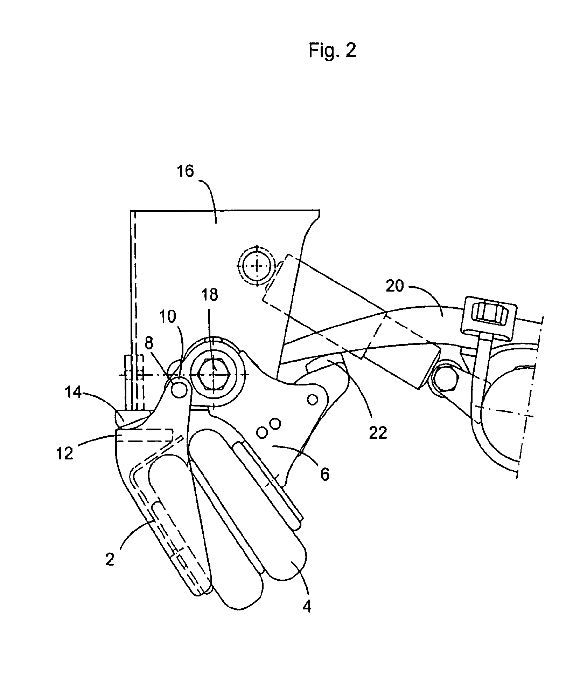

Der Kontaktbereich zwischen Stützelementanschlagbereich 12 und Roll- oder Gleitbereich 14 kann verschiedenste geometrische Ausführungsformen aufweisen. So kann beispielsweise - wie in **Fig. 2** dargestellt - der Roll/Gleitbereich 14 und/oder der Stützelementanschlagbereich 12 im wesentlichen die geometrische Konfiguration einer Evolvente aufweisen, so daß während der Bewegung des Stützelements 2 ein Abwälzen der beiden Flächen zueinander ermöglicht wird. Hierdurch wird kein bzw. lediglich ein minimaler Reibungswiderstand gewährleistet. Es versteht sich, daß einerseits (wie dargestellt) lediglich der Roll/Gleitbereich 14 im wesentlichen die geometrische Konfiguration einer Evolvente aufweisen kann, andererseits kann alternativ oder zusätzlich ebenfalls der Stützelementanschlagbereich 12 zumindest bereichsweise im wesentlichen die geometrische Konfiguration einer Evolvente aufweisen. Somit wird die Effizienz der Achshebevorrichtung nochmals gesteigert.

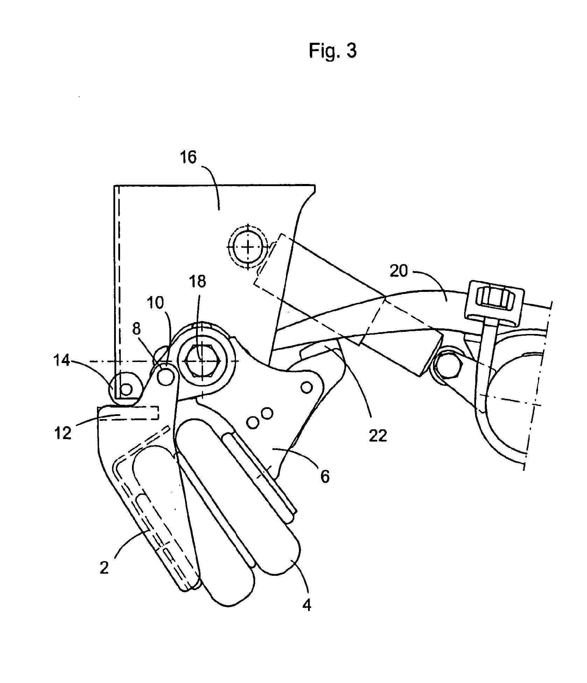

Wie aus der in **Fig. 3** dargestellten weiteren Ausführungsform der erfindungsgemäßen Achshebevorrichtung ersichtlich, kann der Stützelementanschlagbereich 12 auch im wesentlichen plattenförmig ausgebildet sein, wobei der Roll/Gleitbereich 14 als Rotationselement, beispielsweise Walze oder Zylinder, ausgebildet ist, um somit während der Bewegung des Stützelements 2 ein Abrollen im wesentlichen ohne Reibungswiderstand zu ermöglichen.

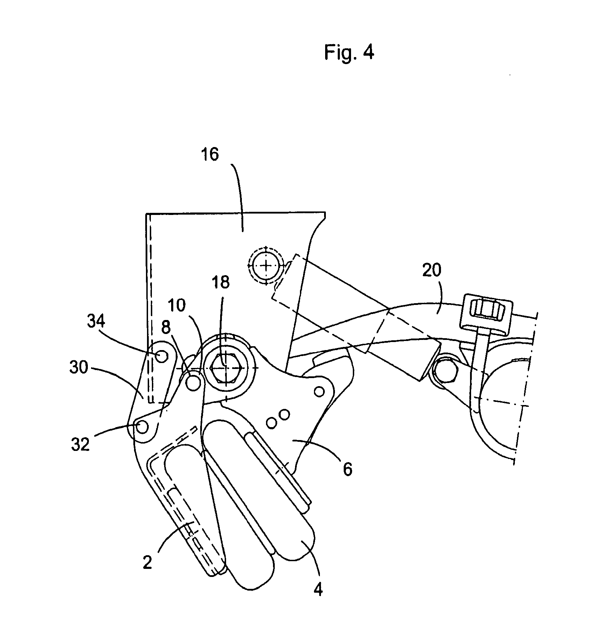

In Fig. **4** ist eine Ausführungsform der erfindungsgemäßen Achshebevorrichtung dargestellt, bei welcher sich das Stützelement 2 mittelbar über ein Hebelglied 30 an dem Rahmenelement 16 des Fahrzeugs abstützt. Somit ergibt sich im wesentlichen die Konfiguration eines Kniehebels. Das Hebelglied 30 ist gelenkig bzw. schwenk- bzw. rotierbar über einen ersten Hebelgliedlagerbereich 32 mit dem Stützelement 2 verbunden. Der erste Hebelgliedlagerbereich 32 am Stützelement 2 ist derart angeordnet, daß dieser vorteilhafterweise von dem Stützelementlagerbereich 8 sowie dem Bereich des Stützelements 2, an welchem das Hubelement 4 angeordnet ist, beabstandet ist. Vorzugsweise bilden Stützelementlagerbereich 8, erster Hebelgliedlagerbereich 32 am Stützelement 2 sowie der Bereich des Stützelements 2, an welchem das Hubelement 4 angeordnet ist, im wesentlichen die geometrische Form eines Dreiecks aus. Ferner ist das Hebelglied 30 über einen zweiten Hebelgliedlagerbereich 34 gelenkig bzw. schwenk- bzw. rotierbar an dem Rahmenelement 16 des Fahrzeugs angeordnet. Infolgedessen ergibt sich bei Aktivierung des Hubelements 4 und einer entsprechenden Bewegung bzw. Rotation von Stützelement 2 und Hebelelement 6 aufgrund des Hebelglieds 30 ein verbesserter Servoeffekt, so daß die Effektivität der Achshebevorrichtung gesteigert wird.

### Bezugszeichenliste

- 2: Stützelement
- 4: Hubelement
- 6: Hebelelement
- 8: Stützelementlagerbereich
- 10: erster Hebelelementlagerbereich
- 12: Stützelementanschlagbereich
- 14: Roll- oder Gleitbereich
- 16: Rahmenelement
- 18: zweiter Hebelelementlagerbereich
- 20: Achslenker
- 22: erster Anschlagbereich
- 24: zweiter Anschlagbereich
- 26: erstes operatives Ende
- 28: zweites operatives Ende
- 30: Hebelglied
- 32: erster Hebelgliedlagerbereich
- 34: zweiter Hebelgliedlagerbereich

## Patentansprüche

1. Achshebevorrichtung für ein Fahrzeug, insbesondere für luftgefederte Fahrzeugachsen, umfassend
ein Stützelement (2), ein Hubelement (4) und ein Hebelelement (6),
wobei das Stützelement (2) und das Hebelelement (6) derart über das Hubelement (4) miteinander koppelbar sind, daß sich bei Betätigung des Hubelements (4) das Stützelement (2) an einem Rahmenelement (16) des Fahrzeugs abstützt und das Hebelement (6) eine vorzugsweise vertikale Kraft auf einen Achslenker (20) des Fahrzeugs ausübt, um diesen anzuheben,
wobei das Hebelement (6) mit Bezug auf ein distales Ende des Achslenkers (20) und/oder das Rahmenelement (16) dreh- bzw. schwenkbar im wesentlichen ortsfest angeordnet ist, **dadurch gekennzeichnet, daß**
das Stützelement (2) am Hebelelement (6) dreh- bzw. schwenkbar gelagert ist.

2. Achshebevorrichtung nach Anspruch 1, wobei das Stützelement (2) einen Stützelementlagerbereich (8) aufweist, über welchen das Stützelement (2) dreh- bzw. schwenkbar am Hebelelement (6) über einen ersten Hebelelementlagerbereich (10) angeordnet ist.

3. Achshebevorrichtung nach einem der vorhergehenden Ansprüche, wobei das Stützelement (2) einen Stützelementanschlagbereich (12) aufweist, welcher mit dem Rahmenelement (16) des Fahrzeugs in Kontakt bringbar ist, um sich an diesem abzustützen.

4. Achshebevorrichtung nach einem der vorhergehenden Ansprüche, wobei das Hebelelement (6) einen zweiten Hebelelementlagerbereich (18) aufweist, über welchen das Hebelelement (6) mit dem distalen Ende des Achslenkers (20) und/oder dem Rahmenelement (16) verbunden ist.

5. Achshebevorrichtung nach Anspruch 4, wobei der erste Hebelelementlagerbereich (10) und der zweite Hebelelementlagerbereich (18) voneinander beabstandet sind.

6. Achshebevorrichtung nach Anspruch 4 oder 5, wobei der zweite Hebelelementlagerbereich (18) zwischen dem ersten Hebelelementlagerbereich (10) und einem mit einem Achslenker (20) in Kontakt bringbaren ersten Anschlagbereich (22) des Hebelelements (6) angeordnet ist.

7. Achshebevorrichtung nach einem der vorhergehenden Ansprüche, wobei das Hubelement (4) ein erstes und ein zweites operatives Ende (26, 28) aufweist, welches erste operative Ende (26) durch das Stützelement (2) aufgenommen ist und welches zweite operative Ende (28) einen zweiten Anschlagbereich (24) des Hebelelements (6) kontaktiert bzw. mit diesem in Kontakt bringbar ist.

8. Achshebevorrichtung nach einem der vorhergehenden Ansprüche, wobei das Hubelement (4) als Gasfaltenbalg und/oder Membranzylinder ausgebildet ist.

9. Achshebevorrichtung nach Anspruch 3 oder einem der vorhergehenden Ansprüche rückbezogen auf Anspruch 3, wobei der Stützelementanschlagbereich (12) ausgebildet ist, bei Betätigung des Hubelements (4) entlang einem Roll- oder Gleitbereich (14) des Rahmenelements (16) zu rollen oder gleiten.

10. Achshebevorrichtung nach Anspruch 3 oder einem der vorhergehenden Ansprüche rückbezogen auf Anspruch 3, wobei der Stützelementanschlagbereich (12) als Rollelement, vorzugsweise als Rolle oder Walze, ausgebildet ist.

11. Achshebevorrichtung nach Anspruch 3 oder einem der vorhergehenden Ansprüche rückbezogen auf Anspruch 3, wobei der Stützelementanschlagbereich (12) im wesentlichen die geometrische Konfiguration einer Evolvente aufweist, welche ausgelegt ist, bei Betätigung des Hubelements (4) auf einem entsprechend ausgebildeten Rollbereich des Rahmenelements (16) abzurollen.

12. Achshebevorrichtung nach einem der vorhergehenden Ansprüche, wobei das Hebelelement (6) derart ausgebildet ist, daß der erste Hebelelementlagerbereich (10) und der erste und zweite Anschlagbereich (22, 24) im wesentlichen eine Deieckskonfiguration bilden, und
wobei der zweite Hebelelementlagerbereich (18) vorzugsweise im wesentlichen entlang des sich zwischen dem ersten Hebelelementlagerbereich (10) und dem ersten Anschlagbereich (22) erstreckenden Seitenbereichs angeordnet ist.

13. Radaufhängung für ein Fahrzeug, insbesondere für ein Nutzfahrzeug, mit einer Achshebevorrichtung, umfassend
einen Achslenker (20), der zumindest ein Achsohr einer Fahrzeugachse trägt und an zumindest einem Ende dreh- bzw. schwenkbar an einem Rahmenelement (16) des Fahrzeugs gelagert ist, ein Stützelement (2), ein Hubelement (4) und ein Hebelelement (6),
wobei das Stützelement (2) und das Hebelelement (6) derart über das Hubelement (4) miteinander koppelbar sind, daß sich bei Betätigung des Hubelements (4) das Stützelement (2) an dem Rahmenelement (16) des Fahrzeugs abstützt und das Hebelement (6) eine vorzugsweise vertikale Kraft auf den Achslenker (20) des Fahrzeugs ausübt, um diesen anzuheben,
wobei das Hebelement (6) mit Bezug auf das Ende des Achslenkers (20) und/oder das Rahmenelement (16) dreh- bzw. schwenkbar im wesentlichen ortsfest angeordnet ist, **dadurch gekennzeichnet, daß**
das Stützelement (2) am Hebelelement (6) dreh- bzw. schwenkbar gelagert ist.

## Claims

1. Axle-lifting device for a vehicle, in particular for air-suspended vehicle axles, comprising a supporting element (2), a lifting element (4) and a lever element (6), the supporting element (2) and the lever element (6) being coupleable to one another via the lifting element (4) in such a way that, when the lifting element (4) is actuated, the supporting element (2) is supported on the frame element (16) of the vehicle and the lever element (6) exerts a preferably vertical force on an axle control arm or axle link (20) of the vehicle, in order to lift the said axle link, the lever element (6) being arranged essentially at a fixed location rotatably or pivotably with respect to a distal end of the axle link (20) and/or to the frame element (16), **characterized in that** the supporting element (2) is mounted rotatably or pivotably on the lever element (6).

2. Axle-lifting device according to Claim 1, the supporting element (2) having a supporting-element bearing region (8) via which the supporting element (2) is arranged rotatably or pivotably on the lever element (6) via a first lever-element bearing region (10).

3. Axle-lifting device according to one of the preceding claims, the supporting element (2) having a supporting-element abutment region (12) which can be brought into contact with the frame element (16) of the vehicle in order to be supported on this.

4. Axle-lifting device according to one of the preceding claims, the lever element (6) having a second lever-element bearing region (18), via which the lever element (6) is connected to the distal end of the axle link (20) and/or to the frame element (16).

5. Axle-lifting device according to Claim 4, the first lever-element bearing region (10) and the second lever-element bearing region (18) being spaced apart from one another.

6. Axle-lifting device according to Claim 4 or 5, the second lever-element bearing region (18) being arranged between the first lever-element bearing region (10) and a first abutment region (22) of the lever element (6), which first abutment region can be brought into contact with an axle link (20).

7. Axle-lifting device according to one of the preceding claims, the lifting element (4) having a first and a second operative end (26, 28), which first operative end (26) is received by the supporting element (2) and which second operative end (28) contacts or can be brought into contact with a second abutment region (24) of the lever element (6).

8. Axle-lifting device according to one of the preceding claims, the lifting element (4) being designed as a gas-filled bellows or concertina and/or a membrane or diaphragm cylinder.

9. Axle-lifting device according to Claim 3 or one of the preceding claims referred back to Claim 3, the supporting-element abutment region (12) being designed, when the lifting element (4) is actuated, to roll or slide along a rolling or sliding region (14) of the frame element (16).

10. Axle-lifting device according to Claim 3 or one of the preceding claims referred back to Claim 3, the supporting-element abutment region (12) being designed as a rolling element, preferably as a roll or roller.

11. Axle-lifting device according to Claim 3 or one of the preceding claims referred back to Claim 3, the supporting-element abutment region (12) having essentially the geometric configuration of an involute which is designed, when the lifting element (4) is actuated, to roll on a correspondingly designed rolling region of the frame element (16).

12. Axle-lifting device according to one of the preceding claims, the lever element (6) being designed in such a way that the first lever-element bearing region (10) and the first and the second abutment region (22, 24) form essentially a triangular configuration, and the second lever-element bearing region (18) preferably being arranged essentially along the side region extending between the first lever-element bearing region (10) and the first abutment region (22).

13. Wheel suspension for a vehicle, in particular for a commercial vehicle, with an axle-lifting device, comprising an axle control arm or axle link (20) which carries or supports at least one axle lug or axle tube of a vehicle axle and which is mounted at least at one end rotatably or pivotably on a frame element (16) of the vehicle, a supporting element (2), a lifting element (4) and a lever element (6), the supporting element (2) and the lever element (6) being coupleable to one another via the lever element (4) in such a way that, when the lifting element (4) is actuated, the supporting element (2) is supported on the frame element (16) of the vehicle and the lever element (6) exerts a preferably vertical force on the axle link (20) of the vehicle, in order to raise the said axle link, the lever element (6) being arranged essentially at a fixed location rotatably or pivotably with respect to the end of the axle link (20) and/or to the frame element (16), **characterized in that** the supporting element (2) is mounted rotatably or pivotably on the lever element (6).

## Revendications

1. Dispositif de levage d'essieu pour véhicule, notamment pour essieux de véhicule à suspension pneumatique, comprenant
un élément d'appui (2), un élément de levage (4) et un élément levier (6),
l'élément d'appui (2) et l'élément levier (6) pouvant être accouplés l'un à l'autre par l'intermédiaire de l'élément de levage (4) de telle sorte que l'élément d'appui (2), lors de l'actionnement de l'élément de levage (4), s'appuie sur un élément de châssis (16) du véhicule et que l'élément levier (6) exerce sur un bras d'essieu (20) du véhicule une force de préférence verticale afin de soulever celui-ci,
l'élément levier étant monté sensiblement en position fixe et de manière à pouvoir tourner et pivoter par rapport à une extrémité distale du bras d'essieu (20) et/ou de l'élément de châssis (16), **caractérisé en ce que**
l'élément d'appui (2) est monté à rotation ou à pivotement sur l'élément levier (6).

2. Dispositif de levage d'essieu selon la revendication 1, dans lequel l'élément d'appui (2) présente une zone support (8) de l'élément d'appui, par l'intermédiaire de laquelle l'élément d'appui (2) est monté à rotation et/ou à pivotement sur l'élément levier (6) par l'intermédiaire d'une première zone support (10) de l'élément levier.

3. Dispositif de levage d'essieu selon l'une des revendications précédentes, dans lequel l'élément d'appui (2) présente une zone de butée (12) de l'élément d'appui qui peut être mise en contact avec l'élément de châssis (16) du véhicule pour s'appuyer sur celui-ci.

4. Dispositif de levage d'essieu selon l'une des revendications précédentes, dans lequel l'élément levier (6) présente une deuxième zone support (18) de l'élément levier, par l'intermédiaire de laquelle l'élément levier (6) est relié à l'extrémité distale du bras d'essieu (20) et/ou avec l'élément de châssis (16).

5. Dispositif de levage d'essieu selon la revendication 4, dans lequel la première zone support (10) de l'élément levier et la deuxième zone support (18) de l'élément levier sont espacées l'une de l'autre.

6. Dispositif de levage d'essieu selon la revendication 4 ou 5, dans lequel la deuxième zone support (18) de l'élément levier est disposée entre la première zone support (10) de l'élément levier et une première zone de butée (22) de l'élément levier (6) pouvant être mise en contact avec un bras d'essieu (20).

7. Dispositif de levage d'essieu selon l'une des revendications précédentes, dans lequel l'élément de levage (4) présente une première et une deuxième extrémité opérationnelle (26, 28), la première extrémité opérationnelle (26) étant reçue par l'élément d'appui (2) et la deuxième extrémité opérationnelle (28) étant en contact avec une deuxième zone de butée (24) de l'élément levier (6) ou pouvant être mise en contact avec celle-ci.

8. Dispositif de levage d'essieu selon l'une des revendications précédentes, dans lequel l'élément de levage (4) est réalisé sous forme de soufflet à gaz et/ou vérin à membrane.

9. Dispositif de levage d'essieu selon la revendication 3 ou l'une des revendications précédentes se rapportant à la revendication 3, dans lequel la zone de butée (12) de l'élément d'appui est conçue pour rouler ou glisser, lors de l'actionnement de l'élément de levage (4), le long d'une zone de roulement ou de glissement (14) de l'élément de châssis (16).

10. Dispositif de levage d'essieu selon la revendication 3 ou l'une des revendications précédentes se rapportant à la revendication 3, dans lequel la zone de butée (12) de l'élément d'appui est conçue sous forme d'élément de roulement, de préférence de rouleau ou cylindre.

11. Dispositif de levage d'essieu selon la revendication 3 ou l'une des revendications précédentes se rapportant à la revendication 3, dans lequel la zone de butée (12) de l'élément d'appui présente sensiblement la configuration géométrique d'une développante qui est conçue pour, lors de l'actionnement de l'élément de levage (4), rouler sur une zone de roulement, réalisée en conséquence, de l'élément de châssis (16).

12. Dispositif de levage d'essieu selon l'une des revendications précédentes, dans lequel l'élément levier (6) est réalisé de telle sorte que la première zone support (10) de l'élément levier et la première et la deuxième zone de butée (22, 24) forment une configuration sensiblement triangulaire, et
dans lequel la deuxième zone support (18) de l'élément levier est disposée, de préférence, sensiblement le long de la zone latérale s'étendant entre la première zone support (10) de l'élément levier et la première zone de butée (22).

13. Suspension pour roue de véhicule, en particulier pour véhicule utilitaire, équipé d'un dispositif de levage d'essieu, comprenant
un bras d'essieu (20) qui porte au moins un anneau d'essieu de véhicule et, à au moins une extrémité, est monté à rotation ou à pivotement sur un élément de châssis (16) du véhicule, un élément d'appui (2), un élément de levage (4) et un élément levier (6),
l'élément d'appui (2) et l'élément levier (6) pouvant être accouplés l'un à l'autre par l'intermédiaire de l'élément de levage (4) de telle sorte que l'élément d'appui (2), lors de l'actionnement de l'élément de levage (4), s'appuie sur l'élément de châssis (16) du véhicule et que l'élément levier (6) exerce sur le bras d'essieu (20) du véhicule une force de préférence verticale afin de soulever celui-ci,
l'élément levier étant monté sensiblement en position fixe et de manière à pouvoir tourner et pivoter par rapport à une extrémité distale du bras d'essieu (20) et/ou de l'élément de châssis (16), **caractérisé en ce que**
l'élément d'appui (2) est monté à rotation et/ou à pivotement sur l'élément levier (6).
